# EUROPÄISCHE PATENTANMELDUNG

(11) **EP 1 228 920 A1**
(43) Veröffentlichungstag der Anmeldung: **07.08.2002**
(21) Anmeldenummer: 02002171.3
(22) Anmeldetag: 29.01.2002
(51) Int. Cl.: B60M 1/20, F16L 3/10

(54) **Halterung zur Aufnahme eines stab- oder rohrförmigen Bauteiles für den Fahrleitungsbau**

(30) Priorität: 01.02.2001 DE 10104589
(71) Anmelder: SIEMENS AKTIENGESELLSCHAFT, 80333 München (DE)
(72) Erfinder: Aretz, Walter, 91054 Erlangen (DE)

(57) **Zusammenfassung**

Halterung zur Aufnahme eines stab- oder rohrförmigen Bauteiles für den Fahrleitungsbau.

Die Erfindung betrifft eine Halterung (1), die zur Aufnahme eines stab- oder rohrförmigen Bauteiles, das für Fahrleitungsbau verwendbar ist, ein arretierbares erstes Teil (3) und ein relativ zu diesen bewegliches zweites Teil (4) aufweist. Es ist vorgesehen, dass jedes der beiden Teile (3, 4) zwei dem Bauteil zugewandte Flächen (5a, 5b; 7a, 7b) hat. Die Flächen (5a, 5b; 7a, 7b) eines Teiles (3; 4) bilden miteinander einen stumpfen oder spitzen Winkel. Die beiden Teile (3, 4) sind zusammen mit dem gehaltenen Bauteil verspannbar.

## Beschreibung

Halterung zur Aufnahme eines stab- oder rohrförmigen Bauteiles für den Fahrleitungsbau.

Die Erfindung betrifft eine Halterung, die zur Aufnahme eines stab- oder rohrförmigen Bauteiles, das für den Fahrleitungsbau verwendbar ist, ein arretierbares erstes Teil und ein relativ zu diesem bewegliches zweites Teil aufweist.

Beim Fahrleitungsbau für elektrische Bahnen müssen stab- oder rohrförmige Bauteile durch Halterungen miteinander verbunden werden. Es gibt eine große Zahl unterschiedlicher Stäbe und Rohre, die insbesondere unterschiedliche Durchmesser haben. Daher war es bisher notwendig, eine große Anzahl unterschiedlicher Halterungen bereitzuhalten. Hatten Stäbe oder Rohre unterschiedliche Durchmesser oder sogar unterschiedliche Profile mussten auch unterschiedliche Halterungen eingesetzt werden.

Der Erfindung liegt die Aufgabe zugrunde, eine Halterung anzugeben, die als Universalhalterung an jedem Stab oder rohrförmigem Bauteil unabhängig von dessen Durchmesser und dessen Profil eingesetzt werden kann. Darüber hinaus soll die Halterung auf Zug belastbar sein. Das heißt, dass eine bei Fahrleitungskettenwerken übliche Kraft auf das gehaltene Bauteil dieses nicht relativ zur Halterung verschieben soll.

Die Aufgabe wird gemäß der Erfindung dadurch gelöst, dass jedes der beiden Teile der Halterung zwei dem Bauteil zugewandte Flächen hat, dass die beiden Flächen eines Teiles miteinander einen stumpfen oder spitzen Winkel bilden und dass die beiden Teile zusammen mit dem gehaltenen Bauteil verspannbar sind.

Ein spitzer Winkel ist größer als 0° und maximal ein rechtr Winkel (90°). Ein stumpfer Winkel ist größer als 90° und maximal 180°.

Mit der Halterung nach der Erfindung wird der Vorteil erzielt, dass das Bauteil unabhängig von seinem Durchmesser stets an beiden einander zugewandten Flächen sowohl des ersten als auch des zweiten Teiles anliegt.

Das erste Teil der Halterüng ist in der Regel an einer Vorrichtung, z.B. an einem Mastausleger arretiert. Da das zweite Teil zusammen mit dem ersten Teil und dem gehaltenen Bauteil verspannbar ist, kann das Bauteil so fest gehalten werden, dass eine Verschiebung infolge einer üblicherweise einwirkenden Kraft ausgeschlossen ist.

Es wird insbesondere der Vorteil erzielt, dass für den Aufbau von Fahrleitungen nur ein Halterungsmodell erforderlich ist und dass trotzdem eine zuverlässige Befestigung von stab-oder rohrförmigen Bauteilen gegeben ist, die auf Zug belastbar ist.

Beispielsweise ist das zweite Teil der Halterung stufenlos verschiebbar. Damit wird der Vorteil erzielt, dass es unabhängig vom Durchmesser des zu haltenden Bauteiles an das Bauteil herangeführt werden kann.

Die beiden Flächen des ersten Teiles bilden miteinander beispielsweise einen größeren Winkel als die beiden Flächen des zweiten Teiles. Damit wird der Vorteil erzielt, dass eine besonders stabile Befestigung des Bauteiles in einfacher Weise möglich ist, bei der die Scheitelpunkte des ersten und des zweiten Teiles der Halterung und der Mittelpunkt des Bauteiles auf einer Linie liegen.

Besonders vorteilhaft für diesen Zweck ist, dass die beiden Flächen des ersten Teiles miteinander beispielsweise einen Winkel zwischen 110° und 130°, insbesondere 120°, bilden.

Die beiden Flächen des zweiten Teiles der Halterung, das beweglich ist, bilden zu diesem Zweck miteinander beispielsweise einen Winkel zwischen 80° und 100°, insbesondere 90°.

Nach einer vorteilhaften Weiterbildung der Halterung sind am ersten Teil Führungsteile für das zweite Teil befestigt. Diese Führungsteile befinden sich parallel zueinander in gleichem Abstand von einer gedachten entlang der Winkelhalbierenden des ersten Teiles verlaufenden Ebene und auf unterschiedlichen Seiten dieser Ebene.

Das zweite Teil der Halterung kann dann vorteilhafterweise wie eine Schublade in einer Führung zwischen den beiden Führungsteilen an das stab- oder rohrförmige Bauteil herangeführt werden. Dabei ist stets sichergestellt, dass das Bauteil optimal zentriert und damit besonders stabil gehalten wird.

Zum Verspannen der beiden Teile der Halterung und des gehaltenen Bauteiles sind beispielsweise miteinander fluchtende Bohrungen in den beiden Teilen und in dem gehaltenen Bauteil angeordnet, durch die eine Schraube geführt und diese arretiert ist. Diese Schraube kann insbesondere mit einer Mutter versehen sein.

Mit der Halterung nach der Erfindung wird insbesondere der Vorteil erzielt, dass beim Fahrleitungsbau nur ein Halterungsmodell benötigt wird, um unterschiedliche Bauteile auf Zug belastbar miteinander zu verbinden.

Ein Ausführungsbeispiel der Halterung nach der Erfindung wird anhand der Zeichnung näher erläutert:
- FIG 1: zeigt die Halterung allein.
- FIG 2: zeigt die Halterung an einem Isolatorkörper.

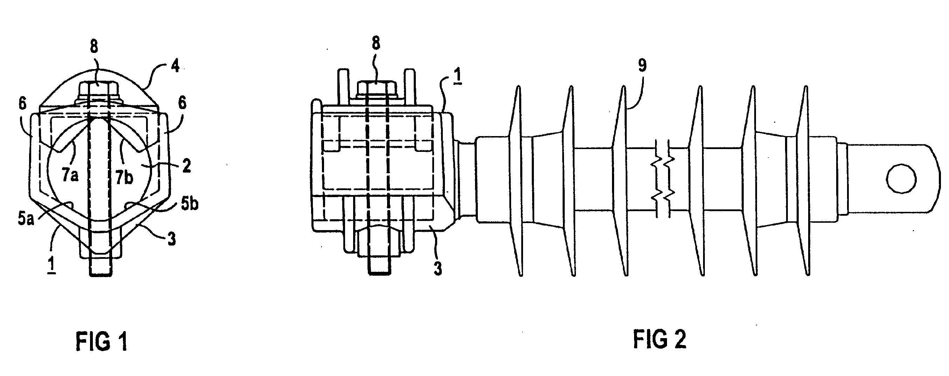

Die Halterung 1 weist in Figur 1 eine Öffnung 2 auf, in der ein nicht gezeigtes stab-oder rohrförmiges Bauteil fest einklemmbar ist. Dazu besteht die Halterung 1 aus einem ersten Teil 3 und einem zweiten Teil 4. Das erste Teil 3 kann in beliebiger Weise an einer bestimmten Stelle eines Oberleitungsmastes befestigt sein. Es kann z.B., wie in Figur 2 gezeigt, stirnseitig mit einem Isolatorkörper 9 verbunden sein.

Dem Bauteil zugewandt weist das erste Teil 3 in Figur 1 Flächen 5a, 5b auf, die miteinander einen Winkel (z.B. 120°) bilden. Vom ersten Teil 3 gehen parallele Führungsteile 6 aus, die das zweite Teil 4 aufnehmen. Das zweite Teil 4 weist ebenfalls Flächen 7a, 7b zur Aufnahme des Bauteiles auf, die miteinander einen Winkel (z.B. 90°) bilden, der kleiner als der Winkel zwischen den Flächen 5a, 5b des ersten Teiles 3 ist.

Nachdem das stab- oder rohrförmige Bauteil auf die Flächen 5a, 5b des ersten Teiles 3 aufgelegt worden ist, wird das zweite Teil 4 der Halterung 1 zwischen den Führungsteilen 6 bis an das Bauteil herangeführt.

Zur Arretierung sind im ersten und zweiten Teil 3, 4 der Halterung 1 und auch im zu haltenden Bauteil Bohrungen vorgesehen, bzw. anzubringen, durch die eine Schraube 8 geführt und arretiert ist. Zur Arretierung kann in der Bohrung, die sich im ersten Teil 3 befindet, ein Gewinde angeordnet sein. Es kann aber auch der Schraube 8 eine nicht gezeigte Mutter zugeordnet sein.

Die gezeigte Halterung 1 gewährleistet unabhängig vom Durchmesser des zu haltenden Bauteiles eine auf Zug stabile Arretierung des Bauteiles.

## Patentansprüche

1. Halterung (1), die zur Aufnahme eines stab- oder rohrförmigen Bauteiles, das für den Fahrleitungsbau verwendbar ist, ein arretierbares erstes Teil (3) und ein relativ zu diesem bewegliches zweites Teil (4) aufweist,
**dadurch gekennzeichnet, dass** jedes der beiden Teile (3, 4) zwei dem Bauteil zugewandte Flächen (5a, 5b; 7a, 7b) hat, dass die beiden Flächen (5a, 5b; 7a, 7b) eines Teiles (3; 4) miteinander einen stumpfen oder spitzen Winkel bilden und dass die beiden Teile (3, 4) zusammen mit dem gehaltenen Bauteil verspannbar sind.

2. Halterung nach Anspruch 1,
**dadurch gekennzeichnet, dass** das zweite Teil (4) stufenlos verschiebbar ist.

3. Halterung nach einem der Ansprüche 1 oder 2,
**dadurch gekennzeichnet, dass** die beiden Flächen (5a, 5b) des ersten Teiles (3) miteinander einen größeren Winkel bilden als die beiden Flächen (7a, 7b) des zweiten Teiles (4).

4. Halterung (1) nach einem der Ansprüche 1 bis 3,
**dadurch gekennzeichnet, dass** die beiden Flächen (5a, 5b) des ersten Teiles (3) miteinander einen Winkel zwischen 110° und 130° bilden.

5. Halterung (1) nach einem der Ansprüche 1 bis 4,
**dadurch gekennzeichnet, dass** die beiden Flächen (7a, 7b) des zweiten Teiles (4) miteinander einen Winkel zwischen 80° und 100° bilden.

6. Halterung (1) nach einem der Ansprüche 1 bis 5,
**dadurch gekennzeichnet, dass** am ersten Teil (3) Führungsteile (6) für das zweite Teil (4) befestigt sind.

7. Halterung (1) nach einem der Ansprüche 1 bis 6,
**dadurch gekennzeichnet, dass** durch Bohrungen in den beiden Teilen (3, 4) und in dem gehaltenen Bauteil eine Schraube (8) geführt und diese arretiert ist.
